# EUROPEAN PATENT APPLICATION

(11) **EP 4 750 033 A1**
(43) Date of publication of application: **27.05.2026**
(21) Application number: 25214588.3
(22) Date of filing: 10.11.2025
(51) Int. Cl.: H04L 67/145, H04L 43/0811

(54) **DYNAMIC SCHEME FOR CUSTOMIZING TCP KEEPALIVE IDLE INTERVAL**

(30) Priority: 21.11.2024 US 202418954648
(71) Applicant: Arlo Technologies, Inc., Carlsbad, CA 92008 (US)
(72) Inventor: Qian, Nanjian, San Diego, CA, 92130 (US); Van Cleave, Todd, San Marcos, CA, 92078 (US)
(74) Representative: Grünecker Patent- und Rechtsanwälte PartG mbB

(57) **Abstract**

A monitoring device and a method are provided for dynamically adjusting an idle interval for a Transmission Control Protocol Keepalive (TCPK) setting in a monitoring device of an electronic monitoring system. The monitoring device is connectable to an access point over a communications network utilizing Transmission Control Protocol (TCP). The initial idle interval for the TCPK of the monitoring device is programmed and a connection between the monitoring device and the access point over the communications network is established. A connection status of the communications network is monitored for failures and a count of the failures is maintained. If the count exceeds threshold, the initial idle interval is reduced by a selected time period to provide an updated idle interval.

## Description

### BACKGROUND OF THE INVENTION

### 1. Field of the Invention

This invention relates generally to electronic monitoring systems, and in particular, to a dynamic scheme for changing the Transmission Control Protocol Keepalive (TCPK) idle interval settings for the various monitoring devices of an electronic monitoring system in order to customize the TCPK idle interval setting for each monitoring device.

### 1. Discussion of the Related Art

Modern electronic monitoring systems for the home and other premises include various components including video and audio communication technology. For example, the typical electronic monitoring system includes imaging devices or cameras directed at various activity zones to be monitored for the simultaneous video and audio communication to a user on a computing device; one or more sensors configured to detect one or more types of conditions or stimulus, for example, motion, opening or closing events of doors or windows, the presence of smoke, carbon monoxide, water leaks, and temperature changes; and/or one or more audio devices such as microphones, sound sensors, and speakers configured for audio communication or providing audible alerts. Upon detection of an activity, such as sound or motion, in an activity zone or upon a captured image of an activity zone matching a predetermined image, the electronic monitoring system triggers an alert which is transmitted to the user device over a communications network to notify the user of the detected activity.

It can be understood that the imaging devices, security cameras, sensors, microprocessors, and communication systems of the electronic monitoring system must all work together to insure the proper functioning of the system. Data must be digitized, recorded, relayed, processed, analyzed, and shared among the various components of the system. Hence, trustworthy communication of data between the various components of the electronic monitoring system is essential for the proper operation of the system.

In order to ensure the trustworthy communication of data between the various components of the electronic monitoring system, data packets are transmitted over the communications network of the electronic monitoring system utilizing Transmission Control Protocol (TCP). TCP is a network communication protocol that ensures the reliable transmission of the data packets between devices over a communication network. Since the communication of data between the various components of the electronic monitoring system may by sporadic, it is imperative that a TCP connection remain active even when no data is exchanged for a long period of time. In order to ensure the data packets are transmitted, when necessary, TCP Keepalive (TCPK) is utilized. TCPK is a mechanism that allows a TCP connection to remain active even when no data is exchanged for a long period of time. More specifically, when a TCP connection to an access point/modem has been idle for a predetermined time period, a device of the electronic monitoring system sends a TCPK data packet to the access point/modem. If a response data packet is not received by the device, the TCP connection is considered dead.

Heretofore, the various devices of prior electronic monitoring systems have experienced frequent TCPK failure issues. More specifically, it has been found that, if the fixed TCPK idle interval settings for a device are longer that the idle mode timer of the access point/modem, a TCPK failure will occur and the device will be disconnected from the access point/modem after periods of inactivity. While reducing the fixed TCPK idle interval settings for all of the devices to a time period less than the idle mode timer of the access point/modem would rectify the TCPK failure issues, it would also impact the battery consumption of the devices, even for those devices not experiencing TCPK failure issues. Therefore, it is highly desirable to provide a dynamic scheme for changing the TCPK idle interval settings for the various devices of an electronic monitoring system such that the TCPK timer may be customized for each device.

Therefore, it is a primary object and feature of the present invention to provide a dynamic scheme for changing the Transmission Control Protocol Keepalive (TCPK) idle interval settings for the various monitoring devices of an electronic monitoring system in order to customize the TCPK idle interval setting for each monitoring device.

It is a further object and feature of the present invention to provide a dynamic scheme for changing the Transmission Control Protocol Keepalive (TCPK) idle interval settings for the various monitoring devices of an electronic monitoring system which minimizes the impact on the battery consumption of the monitoring devices.

It is a still further object and feature of the present invention to provide a dynamic scheme for changing the Transmission Control Protocol Keepalive (TCPK) idle interval settings for the various monitoring devices of an electronic monitoring system which is simple and inexpensive to implement.

### SUMMARY OF THE INVENTION

In accordance with an aspect of the present invention, a method is provided for dynamically adjusting an idle interval for a Transmission Control Protocol Keepalive (TCPK) setting in a monitoring device of an electronic monitoring system. The monitoring device is connectable to an access point over a communications network utilizing Transmission Control Protocol (TCP). The method includes programming the initial idle interval for the TCPK of the monitoring device and establishing a connection between the monitoring device and the access point over the communications network. A connection status of the communications network is monitored for failures, and a count of the failures is maintained. If the count exceeds a threshold, the initial idle interval is reduced by a selected time period to provide an updated idle interval.

The updated idle interval is stored in a non-volatile memory (NVM) database on the monitoring device. After reducing the initial idle interval by the selected time period to provide the updated idle interval, the counter is reset, and the connection between the monitoring device and the access point over the communications network is attempted to be reestablished. If the attempt to reestablish the connection between the monitoring device and the access point over the communications network fails, the updated idle interval is reduced by the selected time period; the counter is reset; and the connection between the monitoring device and the access point over the communications network is attempted to be reestablished. If the updated idle interval is less than or equal to a first selected limit, the selected time period is reduced to a shorter selected time period; the updated idle interval is reduced by the shorter time period, the counter is reduced; and the connection between the monitoring device and the access point over the communications network is attempted to be reestablished. If the updated idle interval is less than or equal to a second selected limit, the updated idle interval is maintained and the connection between the monitoring device and the access point over the communications network is attempted to be reestablished.

In accordance with a further aspect of the present invention, a method is provided for dynamically adjusting an idle interval for a Transmission Control Protocol Keepalive (TCPK) setting in a monitoring device of an electronic monitoring system. The monitoring device is connectable to an access point over a communications network utilizing Transmission Control Protocol (TCP). The method includes programming the idle interval for the TCPK of the monitoring device and monitoring a connection between the monitoring device and the access point over the communications network. The connection is monitored for failure, and a count of the failures is maintained. If the count exceeds a threshold, the idle interval is reduced by a selected time period.

The idle interval is stored in a non-volatile memory (NVM) database on the monitoring device. After reducing the idle interval, the counter is reset and the connection between the monitoring device and the access point over the communications network is attempted to be reestablished. If the attempt to reestablish the connection between the monitoring device and the access point over the communications network fails, the idle interval is reduced by the selected time period, the counter is reset, and the connection between the monitoring device and the access point over the communications network is attempted to be reestablished. If the idle interval is less than or equal to a first selected limit, the selected time period is reduced to a shorter time period. The idle interval is reduced by the reduced selected time period, the counter is reduced, and the connection between the monitoring device and the access point over the communications network is attempted to be reduced. If idle interval is less than or equal to a second selected limit, the idle interval is maintained, and the connection between the monitoring device and the access point over the communications network is attempted to be reduced.

In accordance with a still further aspect of the present invention, a monitoring device for an electronic monitoring system is provided. The monitoring device is connectable to an access point over a communications network utilizing Transmission Control Protocol (TCP). The monitoring device includes an idle interval for a Transmission Control Protocol Keepalive (TCPK) setting. The idle interval has an initial setting. A wireless local area network (WLAN) radio is connectable to the communications network, and is configured for communication with the access point. A controller is operatively connected to the WLAN and the idle interval. The controller is configured to monitor a status of a connection between the WLAN radio and the communications network. The status is one of connected and disconnected and a count is maintained each time the status of the connection is disconnected. The controller is configured such that, if the count exceeds a threshold, the initial setting of the idle interval is reduced by a first selected time period to update the idle interval, and count of the counter is rest to zero.

The monitoring device may include a non-volatile memory (NVM) database configured to store the idle interval. In addition, the controller may be configured to cause the WLAN radio to attempt to reestablish the connection between the monitoring device and the access point over the communications network in response to the status being disconnected. The controller is configured to reduce the first selected time period to a second selected time period in response to the idle interval being less than or equal to a first selected limit. In addition, the controller may be configured to maintain the idle interval at a predetermined time period if the idle interval is less than or equal to a second selected limit. A camera may be operatively connected to the controller. The camera is configured to capture images with a field of view.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Preferred exemplary embodiments of the invention are illustrated in the accompanying drawings in which like reference numerals represent like parts throughout, and in which:
FIG. 1 is a schematic representation of an electronic monitoring system according to aspects of the invention;
FIG. 2 is a flowchart illustrating one embodiment of a procedure for operatively connecting a monitoring device to the electronic monitoring system of FIG. 1; and
FIG. 3 is a flowchart illustrating a procedure for dynamically adjusting an idle interval for a Transmission Control Protocol Keepalive (TCPK) setting in a monitoring device of the electronic monitoring system of FIG. 1.

### DETAILED DESCRIPTION

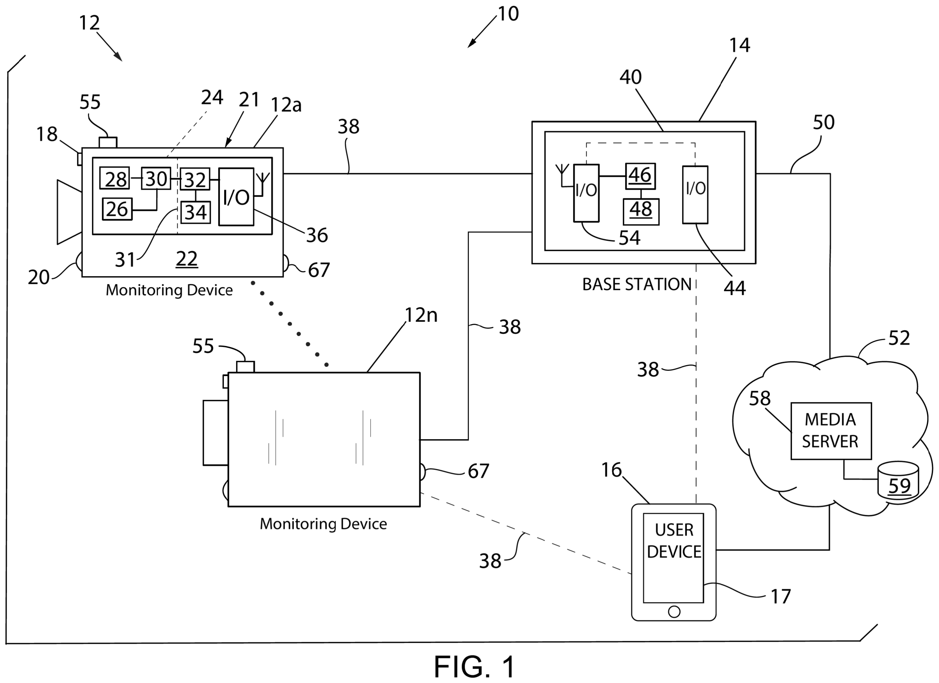

Referring now to FIG. 1, in accordance with an aspect of the invention, an electronic system 10 for real-time monitoring of an area can include one or more monitoring devices 12 and a hub or base station 14. A number "n" 12a-12n of monitoring devices are schematically illustrated in FIG. 1. Unless otherwise specified, all references to an "imaging device" 12 should be construed to apply equally to any of the monitoring devices 12a-12n. One or more user devices 16, such as a smart phone, tablet, laptop, or PC, communicate with the base station 14. Each user device 16 includes a display that typically includes both an audio display and a video display, internal computing and storage capabilities, and a program or application servicing as a user interface for the system 10. In the case of a smart phone, the display typically will include a touch screen and a speaker.

Each monitoring device 12 is configured to perform any of a variety of monitoring, sensing, and communicating functions, including acquiring data, processing the acquired data, and transmitting the processed acquired data to the base station 14 for further processing and/or transmission to a server and/or the user device(s) 16. Each monitoring device 12 may be battery powered or wired. Several such monitoring devices may be mounted around a building or other structure or area being monitored.

For example, in the case of a residential home, monitoring devices 12 could be mounted by each entrance, selected windows, and even on a gate or light pole. A monitoring device 12 also could be incorporated into or coupled to a doorbell, floodlight, etc. The monitoring devices 12 may comprise any combination of devices capable of monitoring a designated area or activity zone such as a home, office, industrial or commercial building, yard, parking or storage lot, etc. Each individual monitoring device 12 may monitor one or a combination of parameters such as motion, sound, temperature etc. It is contemplated for each monitoring device 12 to include a controller 31 having a processor 32 and non-transient memory storage, such as non-volatile memory 34, and/or a wireless I/O communication device 36, among other things, to effectuate the monitoring function of monitoring device 12.

Each of the individual monitoring devices 12 may be or include still or video cameras, temperature sensors, microphones, motion sensors, etc. At least one such monitoring device, one of which is shown at shown at 12a in FIG. 1, is an imaging device described in more detail below. The data acquired by imaging device 12a typically will correspond to a video image, and each imaging device 12a may be or include a camera such as a video camera 21. In addition, as labeled on imaging device 12a, one or more of the imaging devices may include microphone 18, visible and/or infrared (IR) lights 20, a power supply 22 such as a battery or battery pack, and/or imaging device electronic circuitry 24. Circuitry 24 may include one or more imagers 26, an audio circuit 28, and a media encoder 30, among other things, operatively connected to controller 31.

Instead of or in addition to containing a video camera 21 or other imaging device, one or all of the monitoring devices 12 may include one or more sensors 55 configured to detect one or more types of conditions or stimulus, for example, motion, opening or closing events of doors or windows, sounds such as breaking glass or gunshots, the presence of smoke, carbon monoxide, water leaks, and temperature changes. The monitoring devices 12 may further include or be other devices such as audio devices, including microphones, sound sensors, and speakers configured for audio communication or providing audible alerts, such as Arlo ChimeTM audible devices. The imaging devices or cameras 21, sensors 55, or other monitoring devices 12 also may be incorporated into form factors of other house or building accessories, such as doorbells, floodlights, etc., each which may be available on a stand-alone basis or as part of any of a number of systems available from Arlo Technologies, Inc. of Carlsbad, California.

Each monitoring device 12 can communicate with base station 14 through network 38. It is contemplated that the network 38 may be in whole or in part a wired network, a wireless network, or a combination thereof. The network 38 may include a private Wireless Local Area Network (WLAN), hosted by the base station 14 operating as an access point. One such network is an IEEE 802.11 network. It is contemplated for monitoring devices 12 to utilize Transmission Control Protocol (TCP) to send data packets across network 38 to ensure the successful delivery of data to base station 14. As is known, in order to ensure that all data packets received will be identical to and in the same order as those sent, TCP utilizes a technique known as positive acknowledgment with re-transmission. This technique requires the receiver, e.g. base station 14, to respond to the sender, e.g. monitoring devices 12, with an acknowledgment message as the data packets are received.

For reasons hereinafter described, each monitoring device 12 further includes an initial fixed TCP Keepalive (TCPK) parameter. The TCPK parameter is a timer which causes monitoring device 12 transmits a probe data packet to an access point, e.g. base station 14, on network 38 at fixed intervals. The interval at which the monitoring device 12 transmits a probe data packet to an access point is adjustable, for reasons hereinafter described. The value of the initial interval, e.g. 1800 seconds (30 minutes), for each monitoring device 12 may be preset and stored in a non-volatile memory database 34 on the noted monitoring device 12. Upon receipt of the probe data packet, the receiver, e.g. base station 14, responds to the sender, e.g. monitoring devices 12, with an acknowledgment message. In addition, each monitoring device 12 further includes TCPK failure counter to keep track of the number of instances wherein monitoring device 12 does not receive an acknowledgement message in response to transmission of a probe data packet.

The hub or base station 14 can include base station electronic circuitry 40 including router 54 for communicating with the monitoring devices 12 over network 38, a second wired or wireless I/O communication device or modem 44 for accessing a Wide Area Network (WAN) 50, such as the Internet through a Local Area Network (WLAN) 50, a processor 46 and/or a non-transient memory storage 48, among other things. It can be understood that router 54 and/or modem may comprise a second device or be combined with base station 14, wherein either configuration would still be considered a "base station" within the meaning of the present disclosure. It also should be apparent that "circuity" may comprise hardware, firmware, software, or any combination thereof.

As is conventional, to prevent the unnecessary congestion of multiple clients on network 38, the access point, e.g. at base station 14, is provided with an idle or inactivity timer. More specifically, the inactivity timer causes clients, e.g. monitoring devices 12, that are inactive for defined amount of time to be de-authenticated from network 38 and their state removed from base station 14. Typically, the inactivity timer has a settable range of 60 seconds to 24 hours. Alternatively, the inactivity timer may have a default setting.

Still referring to FIG. 1, the base station 14 may also be in communication with a server 58, which may be on a cloud-based control service system 52 accessible via the WAN 50. Server 58 can include or be coupled to a microprocessor, a microcontroller or other programmable logic element 59 (individually and collectively considered "a controller") configured to execute a program. Alternatively, interconnected aspects of the controller and the programs executed by it could be distributed in various permutations within monitoring device 12, base station 14, user device 16, and server 58. This program, while operating at the server level, may be utilized in filtering, processing, categorizing, storing, recalling and transmitting data received from the monitoring devices 12 via the base station 14.

In order to on-board/integrate a monitoring device 12 having a camera, such as smart security camera 12a, into monitoring system 10, it is necessary to provide monitoring device 12a-12n with access credentials for the access point to the frequency band of network 38 broadcast by router 54 of base station 14. More specifically, router 54 of base station 12 is initialized so as to broadcast network 38 on a frequency band having its own unique network name and corresponding password. The connection point to the frequency band is an access point. In addition, when initialized, router 54 connects to WAN 50 so as to interact with server 58 and provides server 58 with data regarding the access credentials for the frequency band being broadcast. If a user utilizes a PC or laptop to interact with router 54, the user may access the device through a user account set up on server 58. Alternatively, if the user utilizes a mobile device, such as a smart phone or tablet, an application may be provided thereon which allows the user access to their account.

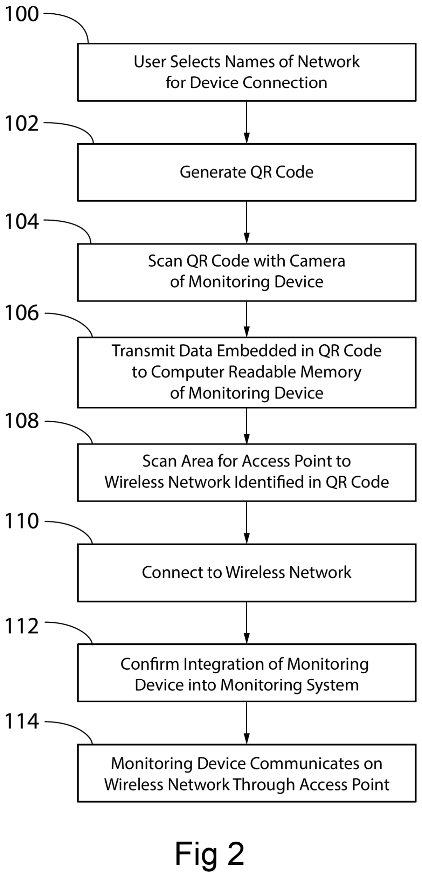

Referring to FIG. 2, a process for operatively connecting a monitoring device to the electronic monitoring system of FIG. 1 is illustrated via which a user can gain access to the network name and corresponding password for the access point to the frequency band of network 38 broadcast by router 54, either by direct communication with the router 54 through user device 16 or through communication with server 58, block 100. It is contemplated for the user to change the network name and corresponding password to a user-selected network name and corresponding user-selected password, if so desired by the user.

Upon completion of the naming of the network name and corresponding password for the access point, a user may be prompted on user device 16 to select the type of monitoring device 12 to be added to monitoring system 10, e.g., smart security camera system 12a. It is contemplated for the user to select the type of monitoring device 12 to be added to monitoring system 10 through a drop-down menu displayed on user device 16 or by the user entering an identification code (e.g., a UPC code) corresponding to the type of monitoring device 12 to be added.

Once the type of monitoring device 12, in this case a smart camera 12a, is selected, the program or application on the user device 16 generates a machine/computer-readable code, such as a QR code, at block 102. The code includes data corresponding to the access point and associated access credentials (or in other words the network name and corresponding password selected by the user) embedded therein which are required for monitoring device 12a to connect to the access point of network. As is known, a QR code is comprised of black squares arranged in a square grid on a white background, which can be read by an imaging device such as a camera, processed, and appropriately interpreted to allow for the transfer of the data embedded in the code. The QR code may be displayed on display 17 of user device 16 or the QR code may be printed out by a user.

After being powered up, monitoring device 12 must be placed in a connection mode to transfer data thereto. By way of example, a user may press and release sync button 67 on monitoring device 12a (FIG. 1) to cause monitoring device 12 to enter the connection mode wherein the data corresponding to the access point and the associated access credentials which are required for monitoring device 12a to connect to network 38 may be transferred thereto. More specifically, with monitoring device 12a in its connection mode, a visual display, such as a blinking LED, is provided to indicate to the user that imaging device 21 of monitoring device 12a is now configured to scan the QR code, heretofore described. Imaging device 21 of monitoring device 12a is positioned within a set range of (e.g., approximately 8 inches) and directed at the QR code such that the QR code is within the field of view of imaging device 21 of monitoring device 12a. When imaging device 21 of monitoring device 12 reads the QR code, monitoring device 12a and/or user device 16 may provide an audible signal informing the user that monitoring device 12a has read the QR code and received the data embedded in the QR code. If no audible signal is provided, the process may be repeated.

Once the QR code is scanned by imaging device 21 of monitoring device 12a, controller 31 of monitoring device 12 causes the data embedded in the QR code to be processed, appropriately interpreted, and transmitted to non-volatile memory 34 for future reference, block 106. In addition, controller 31 causes monitoring device 12 to scan the area for the access point identified in the data received via the QR code, block 108. Once the access point is identified, controller 31 causes primary wireless I/O communication device 36 of monitoring device 12a to connect to the access point utilizing the network name and corresponding password for the access point obtained via the QR code, block 110. Once connected to network 38, monitoring device 12 may send and receive data over network 38 to base station 14 and through monitoring system 10 to server 58, and typically from network 38 to WAN 50 for processing by server 58. Once monitoring device 12 connects to network 38, a serial number of and/or other information concerning the monitoring device 12a may be transmitted to server 58. Server 58 may provide confirmation of the successful integration of monitoring device 12a into monitoring system 10, block 112. For example, server 58 may cause the serial number of monitoring device 12a and the time zone in which monitoring device resides to be transmitted to user device 16 for display on display 17.

With monitoring device 12a integrated into monitoring system 10, data packets corresponding to sounds, images, captured frames, and/or video clips captured by the camera of monitoring device 12a may be transmitted by monitoring device 12 over network 38 to the base station 14, to the server 58 over WAN 50, and/or to the one of more user devices 16, block 114. Further, data packets from one of more user devices 16, server 58 or the various components of monitoring system 10 may be transmitted to monitoring device 12a over network 38.

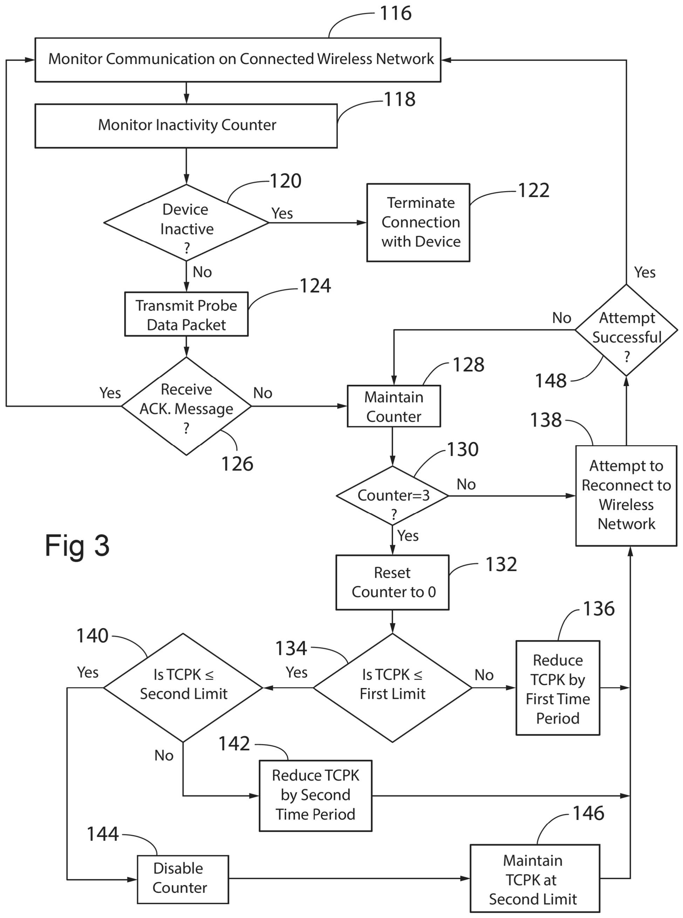

Referring to FIG. 3, during operation, controller 31 of monitoring device 12a monitors communications on network 38, block 116. If controller 31 of monitoring device 12a senses no disruption in communication, monitoring device 12a remains in the default operational state and communications continue through the access point. Simultaneously, base station 14 monitors the inactivity timer, block 118. If a monitoring device 12 is found to be inactive for the defined amount of time, block 120, base station 14 terminates the connection between the noted monitoring device 12 and network 38, block 122. Further, as heretofore described, in order to prevent monitoring device 12 from becoming disconnected from network 38, the TCPK parameter of each monitoring device 12 is configured to transmit a probe data packet to an access point, e.g. base station 14, on network 38 at a fixed initial interval, e.g, every 1800 seconds, block 124. It can be understood that, if the time period of the TCPK parameter is less than time period defined by the inactivity timer, the connection between the noted monitoring device 12 and network 38 will be maintained by base station 12. More specifically, it is noted that if the noted monitoring device 12 and base station 14 are connected to network 38, base station 14 will receive the probe data packet from the noted monitoring device 12 and respond to the noted monitoring devices 12 with an acknowledgment message.

If the noted monitoring device 12 and/or base station 14 are disconnected to network 38, base station 14 will not receive the probe data packet, and the noted monitoring devices 12 will not receive the acknowledgment message, thereby resulting in a determination that there is a connectivity issue or communication(s) disruption, block 126. The TCPK failure counter of the noted monitoring device 12 maintains a count of the number of consecutive instances wherein monitoring device 12 does not receive an acknowledgement message in response to transmission of a probe data packet, block 128. After each disruption in the connection between a noted monitoring device 12 and network 38, controller 31 causes primary wireless I/O communication device 36 of monitoring device 12a to attempt to reconnect the noted monitoring device 12 to network 38 through the access point, block 138. If it is determined in block 148 that the reconnection attempt is successful, monitoring device 12 is restored to the default operational state, and system communications continue through the access point, as heretofore described beginning with block 116. If not, the counter is maintained in block 128, and the operations beginning with block 128 are repeated.

If the number of instances wherein monitoring device 12 does not receive an acknowledgement message in response to transmission of a probe data packet meets a threshold, e.g. 3 times, block 130, controller 31 will reset the counter to 0 in block 132 and execute instructions in block 134 to determine whether the TPCK parameter is less than a first limit of, for example, e.g. 60 seconds. If not, the controller 31 will reduce the TPCK by a first time period of, for example, 40 seconds in block 136, and the thus updated time period of the TCPK parameter will be stored in non-volatile memory 34. The primary wireless I/O communication device 36 of the noted monitoring device 12 then will attempt to reconnect the noted monitoring device 12 to network 38 through the access point, block 138. If it is determined in block 148 that the reconnection attempt is successful, monitoring device 12 is restored to the default operational state, and system communications continue through the access point, block 116. If not, the process beginning with block 128 is repeated, now with the reduced timer setting.

The above-described process is repeated each time monitoring device 12 does not receive an acknowledgement message in response to transmission of a probe data packet. If, it is ultimately determined in block 134 that the time period of the TCPK parameter is reduced to an interval less than or equal to a first present limit, e.g. 60 seconds, , the routine will determine in block 140 if the TCPK parameter is less than a second present limit of, for example, 40 seconds. If not, the time period of the TCPK parameter will be reduced by a second, smaller predefined time period, e.g. 20 seconds in block 142 and the system will attempt to reestablish a network connection in block 128. As such, if the number of instances wherein monitoring device 12 does not receive an acknowledgement message in response to transmission of a probe data packet meets a threshold, e.g. 3 times, controller 31 of monitoring device 12 may execute a program to: reduce the time period of the TCPK parameter by the second predefined time period, e.g. 20 seconds, to an updated time period, e.g. 40 seconds, block 142; cause the updated time period of the TCPK parameter to be stored in non-volatile memory 34; and cause primary wireless I/O communication device 36 of the noted monitoring device 12 to attempt to reconnect the noted monitoring device 12 to network 38 through the access point, block 138. If it is then determined at block 148 that the reconnection attempt is successful, monitoring device 12 is restored to the default operational state and system communications continue through the access point, block 116. If not, the process returns to block 128.

The above-described process is repeated each time monitoring device 12 does not receive an acknowledgement message in response to transmission of a probe data packet. If the time period of the TCPK parameter is reduced to an interval less than or equal to a second present limit, e.g. 20 seconds, block 142, the time period of the TCPK parameter will be fixed at the second preset limit and no longer be reduced. As such, if it is determined in block 140 that monitoring device 12 does not receive an acknowledgement message in response to transmission of a probe data packet, controller 31 of monitoring device 12 may execute a program to: disable the TCPK failure counter, block 144; maintain the time period of the TCPK parameter at the second predefined time period, e.g. 20 seconds, block 146; and cause primary wireless I/O communication device 36 of the noted monitoring device 12 to attempt to reconnect the noted monitoring device 12 to network 38 through the access point, block 138. If it is determined in block 148 that the reconnection attempt is successful, monitoring device 12 is restored to the default operational state and system communications continue to be monitored through the access point, block 116. If it is determined at decision block 148 that the reconnection attempt has failed, the process will return to block 128, with the result now being that the controller 31 of monitoring device 12a will continue to attempt reconnection to network 38, cycling through blocks 128, 130, 132, 134, 140, 144, 146, 138, and 148 with the counter disabled and the TCPK retained at the second reduced limit unless and until reconnection is successful.

As described, a dynamic scheme is provided for changing the Transmission Control Protocol Keepalive (TCPK) idle interval settings for the various devices of an electronic monitoring system such that the time period for the TCPK idle interval timer may be customized for each monitoring device 12 of monitoring system 10. Although the operations described above with reference to FIG. 2 are described in conjunction with imaging device 12a, it is to be understood that the same are comparable functions could be performed with the more generic monitoring device of FIG. 1 or any of a variety monitoring devices as well, so long as the monitoring device has the capability of receiving the credentials of the access point to network 38 or otherwise acquiring the required data.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

## Claims

1. A method for dynamically adjusting an idle interval for a Transmission Control Protocol Keepalive (TCPK) setting in a monitoring device of an electronic monitoring system, the monitoring device connectable to an access point over a communications network utilizing Transmission Control Protocol (TCP), comprising:
setting an initial idle interval for the TCPK of the monitoring device;
establishing a connection between the monitoring device and the access point over the communications network;
monitoring a connection status of the communications network for failures;
determining if the connection has failed;
if the connection has failed, attempting reestablishing the connection between the monitoring device and the access point over the communications network,
repeating the determining and attempting while maintaining a count of the failures; and
if the count exceeds a threshold before the connection between the monitoring device and the access point over the communications network is reestablished, reducing the initial idle interval by a selected time period to provide an updated idle interval.

2. The method of claim 1, wherein the updated idle interval is stored in a non-volatile memory (NVM) database on the monitoring device.

3. The method of the preceding claims, further comprising, after reducing the initial idle interval by the selected time period to provide the updated idle interval:
resetting the count to zero; and
attempting to reestablish the connection between the monitoring device and the access point over the communications network.

4. The method of claim 3, wherein, if the attempt to reestablish the connection between the monitoring device and the access point over the communications network fails, additionally:
reducing the updated idle interval by the selected time period;
resetting the count to zero; and
attempting to reestablish the connection between the monitoring device and the access point over the communications network.

5. The method of claim 4, wherein, if updated idle interval is less than or equal to
a first selected limit, additionally reducing the selected time period to a reduced selected time period.

6. The method of claim 5, further comprising
reducing the updated idle interval by the reduced selected time period;
resetting the count to zero; and
attempting to reestablish the connection between the monitoring device and the access point over the communications network.

7. The method of claim 6, wherein, if updated idle interval is less than or equal to a second selected limit, additionally:
maintaining the updated idle interval; and
attempting to reestablish the connection between the monitoring device and the access point over the communications network.

8. The method of any of the preceding claims, further comprising resetting the count to zero if an attempt to reestablish the communication between the monitoring device and the access point over the communications network is successful.

9. A monitoring device for an electronic monitoring system, the monitoring device connectable to an access point over a communications network utilizing Transmission Control Protocol (TCP), comprising:
a wireless local area network (WLAN) radio connectable to the communications network and being configured for communication with the access point;
a controller operatively connected to the WLAN and being configured to:
provide an idle interval for a Transmission Control Protocol Keepalive (TCPK) setting, the idle interval having an initial setting
periodically monitor a status of a connection between the WLAN radio and the communications network, the status being one of connected and disconnected; and
count each consecutive time the status of the connection is disconnected;
wherein:
if the count exceeds a threshold, the controller is configured to:
reduce the initial setting of the idle interval by a first selected time period to update idle interval; and
reset the count of the counter to zero.

10. The monitoring device of claim 9, further comprising non-volatile memory (NVM) database configured to store the idle interval.

11. The monitoring device of claim 9 or claim 10, wherein the controller is configured to cause the WLAN radio to attempt to reestablish the connection between the monitoring device and the access point over the communications network in response to the status being disconnected.

12. The monitoring device of any of claims 9-11, wherein the controller is configured to reduce the first selected time period to a second selected time period in response to the idle interval being less than or equal to a first selected limit.

13. The monitoring device of any of claims 9-12, wherein the controller is configured to
maintain the idle interval at a predetermined time period if the idle interval is less than or equal to a second selected limit.

14. The monitoring device of any of claims 9-13, further comprising a camera operatively connected to the controller, the camera configured to capture images with a field of view.
